# EUROPÄISCHE PATENTSCHRIFT

(11) **EP 3 233 639 B1**
(45) Veröffentlichungstag und Bekanntmachung des Hinweises auf die Patenterteilung: **16.09.2020**
(21) Anmeldenummer: 15813076.5
(22) Anmeldetag: 21.12.2015
(51) Int. Cl.: B65B 5/06, A22C 17/00, B65G 35/06, B65B 35/44, B65B 35/24, B07C 3/08, B65G 54/02, B65B 59/00, B65B 43/56, B65B 43/52, B26D 7/32, B65B 25/06, B65B 5/10, B65G 47/96

(54) **VORRICHTUNG ZUM BEWEGEN VON OBJEKTEN**
DEVICE FOR MOVING OBJECTS
DISPOSITIF POUR DÉPLACER DES OBJETS

(30) Priorität: 22.12.2014 DE 102014119351
(43) Veröffentlichungstag der Anmeldung: 25.10.2017
(73) Patentinhaber: Weber Maschinenbau GmbH Breidenbach, 35236 Breidenbach (DE)
(72) Erfinder: BURK, Alexander, 35619 Braunfels (DE); ECKHARDT, Christoph, 35236 Breidenbach (DE); GERLACH, Jochen, 35232 Dautphetal (DE); NICHAU, Marco, 57334 Bad Laasphe (DE); NISPEL, Thomas, 35232 Dautphetal (DE); ROTHER, Ingo, 35236 Breidenbach (DE); VON KEUDELL, Leopold, 88682 Salem (DE); ZECHER, Steffen, 35460 Staufenberg (DE); LISCHINSKI, Gerd, 17349 Schönbeck (DE)
(74) Vertreter: Manitz Finsterwald Patent- und Rechtsanwaltspartnerschaft mbB
(86) Internationale Anmeldenummer: PCT/EP2015/080706
(87) Internationale Veröffentlichungsnummer: WO 2016/102417

(56) Entgegenhaltungen:
- EP-A1- 1 002 724
- EP-A2- 0 095 068
- EP-A2- 2 599 721
- WO-A1-2012/150082
- WO-A1-2013/031740
- WO-A1-2013/044395
- WO-A2-2005/110898
- DE-U1-202010 011 406
- FR-A1- 2 679 201
- FR-A2- 2 355 577

## Beschreibung

Die Erfindung betrifft eine Vorrichtung zum Bewegen von Objekten mittels in einem Bahnsystem geführter Transportmover, sowie ein System aus einer derartigen Vorrichtung und einer Aufnahme für ein zu bewegendes Objekt.

Derartige Vorrichtungen und Systeme werden, z.B. in der Lebensmittelindustrie, eingesetzt, um Objekte, wie z.B. Wurst- oder Käsescheibenstapel, zwischen verschiedenen Be- und Verarbeitungsstationen zu bewegen bzw. zu transportieren. Dabei stellt die Übergabe des Objekts von der Verarbeitungsstation an den Transportmover oder von dem Transportmover an eine weitere Verarbeitungsstation eine besondere Herausforderung dar. Denn häufig sind die Objekte mechanisch empfindlich, haften an einer Auflagefläche aufgrund ihrer fettigen Oberfläche und sind mechanisch nachgiebig, so dass eine Handhabung erschwert wird. Daher muss zur Handhabung häufig auf eine technisch aufwändige Lösung, z.B. unter Verwendung eines Roboters, zurückgegriffen werden, um die Objekte behutsam und dennoch mit ausreichender Geschwindigkeit zwischen einer Verarbeitungsstation und einem Transportmover zu übergeben. Dies gilt insbesondere, aber nicht nur, bei der Übergabe von dem Transportmover an eine weitere Verarbeitungsstation, also für den Vorgang der Abgabe des Objekts von dem Transportmover. Eine Vorrichtung zum Transportieren von Objekten ist beispielsweise in der WO 2005/110898 A2 offenbart.

Es ist die Aufgabe der Erfindung, bei einer Vorrichtung zum Bewegen von Objekten der eingangs genannten Art die Übergabe von Objekten von dem oder an den Transportmover zu vereinfachen.

Diese Aufgabe wird durch eine Vorrichtung mit den Merkmalen des Anspruchs 1 gelöst.

Gemäß diesem Aspekt der Erfindung ist also eine transportmoverseitige Auflage für die Aufnahme vorgesehen.

Ein Vorteil der Erfindung besteht generell darin, dass beim Aufnehmen bzw. Auflegen der Aufnahme auf die Auflage kein Rahmen überwunden werden muss. So wird die Vorrichtung zum Bewegen von Objekten vereinfacht. Auch das Abgeben der Aufnahmen von dem Transportmover wird erleichtert, weil zumindest zeitweise kein Rahmen im Weg ist. Die Aufnahmen werden aber dennoch dann, wenn es erforderlich ist, sicher auf der Auflage des Transportmovers durch die Fixiermittel gehalten. Erforderlich ist ein Halten einer Aufnahme auf der Auflage zeitweise während des Transports, also während sich der betreffende Transportmover in dem Bahnsystem bewegt, und zwar vor allem dann, wenn die Aufnahme bzw. ein darin befindliches Objekt beschleunigt wird, und zwar sowohl in Bewegungsrichtung als auch bei Kurvenfahrten durch Fliehkräfte.

Die Fixiermittel sind insbesondere auch zum Fixieren der Aufnahme auf der Auflage beim Aufnehmen und/oder zum Freigeben der Aufnahme beim Abgeben von der Auflage ausgestaltet.

Wie bereits erwähnt, handelt es sich bei der Erfindung bei den zu bewegenden Objekten insbesondere um Lebensmittelprodukte, vorzugsweise um Portionen aus einer oder mehreren Scheiben, die von einem Produkt, z.B. einem Wurst- oder Käselaib, abgeschnitten werden, beispielsweise mittels eines Hochleistungsslicers. Bei den Aufnahmen für die Portionen kann es sich insbesondere um Verpackungsunterteile handeln, die auch als Trays bezeichnet werden. Die Portionen werden entweder durch geeignete Handhabungsmittel in die Trays eingelegt oder direkt in die Trays hinein geschnitten.

Die Handhabung von Verpackungsteilen bzw. Trays und damit gewissermaßen ein indirekter Umgang mit den Lebensmittelportionen ist gegenüber einer direkten Handhabung der Lebensmittel unter hygienischen Gesichtspunkten vorteilhaft.

Wie dem Fachmann grundsätzlich bekannt ist, können Trays - oder allgemein Teile bzw. Unterteile von für Lebensmittelportionen wie z.B. Wurst- oder Käsescheiben zum Einsatz kommenden Verpackungen - beispielsweise aus einer Kunststofffolie in einem Tiefziehverfahren hergestellt werden. Derartige Trays sind insbesondere formstabil. Bei den Trays kann es sich auch um Kunststoff-Formteile oder um insbesondere geschäumte Formkörper handeln. Die Verpackungen bzw. Trays können in einer großen Vielfalt an Formen, Formaten und Größen hergestellt werden. Trays können einen erhöhten Randbereich aufweisen, tablettartig und/oder zumindest im Wesentlichen eben ausgeführt sein.

Gemäß der Erfindung umfassen die Transportmover jeweils zumindest einen mit dem Bahnsystem zusammenwirkenden Läufer, wobei zumindest ein und insbesondere jeder Transportmover wenigstens einen am Läufer angebrachten Träger umfasst, der die rahmenfreie Auflage bildet oder mit der rahmenfreien Auflage verbunden ist.

Das Objekt kann eine Verpackung oder einen Teil einer Verpackung, wie z.B. einen sogenannten Tray, umfassen.

Der Antrieb für die Transportmover kann beispielsweise als Linearmotor ausgebildet sein, insbesondere als linearer Synchronmotor oder als linearer Induktionsmotor.

Derartige Linearmotoren sind im Zusammenhang mit einer Vielzahl von Anwendungen grundsätzlich bekannt. Von Vorteil ist ein derartiges Antriebsprinzip unter anderem dann, wenn vergleichsweise geringe Lasten zu transportieren sind, wie es in dem hier in Rede stehenden Bereich des Transports von Lebensmittelportionen der Fall ist.

Ein für die Erfindung grundsätzlich verwendbares Transportsystem, auf das hiermit im Hinblick auf das Erfordernis der Ausführbarkeit der Erfindung ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transportmover von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben.

Das Bahnsystem bzw. die einzelnen Bahnen eines solchen Transportsystems können in eine Vielzahl aufeinanderfolgender Bahnelemente unterteilt werden, die gewissermaßen jeweils einen Einzel-Linearmotor bilden und von einer Steuereinrichtung individuell ansteuerbar sind. Wenn gleichzeitig die im Bahnsystem befindlichen Transportmover mittels der Steuereinrichtung identifizierbar sind, dann können auf diese Weise grundsätzlich beliebig viele Transportmover gleichzeitig in einem grundsätzlich beliebig komplexen Bahnsystem betrieben und dabei individuell bewegt werden.

Für die Identifizierung bzw. Lokalisierung der einzelnen Transportmover im Bahnsystem verwendet die vorstehend erwähnte Firma MagneMotion Inc. eine Technik, bei der jeder Transportmover mit einem Transducer versehen ist, der in den vom Bahnsystem gebildeten Stator ein Signal induziert, wodurch es der Steuereinrichtung ermöglicht wird, die exakte Position des Transportmovers mit einer von der Größe des Gesamtsystems abhängigen Genauigkeit von Bruchteilen eines Millimeters oder Bruchteilen eines Zentimeters zu bestimmen. Ein Vorteil dieses Systems besteht darin, dass keine externen Sensoren benötigt werden. Bei dem Steuersystem der Firma MagneMotion Inc. ist außerdem durch eine Unterteilung der Bahnen in eine Vielzahl von - gewissermaßen jeweils einen Einzel-Linearmotor darstellenden - Bahnelementen sichergestellt, dass keine Kollisionen zwischen aufeinanderfolgenden Transportmovern auftreten. So kann ein Transportmover nur dann in das nächste Bahnelement einfahren, wenn dies von der Steuereinrichtung gestattet wird, was insbesondere dann nicht der Fall ist, wenn sich ein anderer Transportmover in dem Bahnelement befindet.

Vor dem Hintergrund dieses grundsätzlich bekannten Transportsystems ist bei der Erfindung in einem möglichen Ausführungsbeispiel vorgesehen, dass das Bahnsystem als Stator des Linearmotors ausgebildet ist.

Insbesondere ist der Läufer jeweils ein Bestandteil eines linearen Synchronmotors, wobei insbesondere der Läufer zumindest einen Permanentmagneten umfasst und das Bahnsystem als Motorstator ausgebildet ist.

Vorzugsweise ist das Bahnsystem in eine Vielzahl von, insbesondere jeweils einen Einzel-Linearmotor darstellenden, Bahnelementen unterteilt, die von der Steuereinrichtung individuell ansteuerbar sind.

Die Transportmover sind vorzugsweise von der Steuereinrichtung identifizierbar.

Des Weiteren sind die Transportmover vorzugsweise von der Steuereinrichtung im Bahnsystem lokalisierbar.

Das Transportsystem weist eine Mehrzahl von Transportmovern auf, deren Gesamtanzahl von der jeweiligen Anwendung abhängig ist. Es kann vorgesehen sein, dass das Bahnsystem mehrere Dutzende bis einige Hundert Transportmover umfasst, d.h. es kann gewissermaßen ein regelrechter "Schwarm" von Transportmovern im Bahnsystem vorhanden sein, um eine Vielzahl von Portionen zu transportieren und gegebenenfalls Zusatzfunktionen durchzuführen wie z.B. eine Pufferung, ein Verteilen und/oder ein Zuordnen von Portionen.

Im Rahmen der Erfindung kann ein zu bewegendes Objekt z.B. ein Produkt, ein Lebensmittelprodukt und/oder einen Stapel oder - allgemein - eine Portion aus z.B. Wurst- oder Käsescheiben umfassen. Auch kann ein Objekt ein Tray, eine Folie, eine Platte, ein Behältnis und/oder einen Schlauchbeutel, jeweils insbesondere zur Aufnahme eines Lebensmittelproduktes, umfassen.

Im Rahmen der Erfindung ist der Begriff "Portion" breit zu verstehen. Eine Portion kann dementsprechend aus nur einer einzigen Scheibe bestehen. Alternativ kann eine Portion mehrere Scheiben umfassen, die in einer grundsätzlich beliebigen Relativanordnung vorliegen können, beispielsweise in einer sogenannten Stapel- oder Schindelanordnung, wie sie auf dem hier in Rede stehenden technischen Gebiet dem Fachmann bekannt sind. Bei der Portion kann es sich um eine Gesamtportion handeln, wie sie abschließend verpackt und im Handel angeboten wird. Alternativ kann die Portion eine Teilportion sein, die erst zusammen mit einer oder mehreren weiteren Teilportionen, die wiederum jeweils eine oder mehrere Scheiben umfassen können, eine Gesamtportion bildet. Die Teilportionen einer Gesamtportion können aus unterschiedlichen Produktsorten gebildet sein, so dass durch Zusammenstellen mehrerer Teilportionen eine Mehrsorten-Portion erzeugt werden kann und nach deren Verpackung somit eine Mehrsorten-Packung vorliegt. Bei den Scheiben kann es sich beispielsweise um vergleichsweise dünne Scheiben handeln, wie sie in Form von Wurst- oder Käseaufschnitt allgemein bekannt sind. Alternativ kann es sich bei den Scheiben jeweils um im Vergleich zu Aufschnitt relativ dicke Stücke wie beispielsweise Frischfleischstücke handeln.

Mit anderen Worten handelt es sich bei Anwendungen im Lebensmittelbereich im Rahmen der Erfindung bei einer Portion um die im Hinblick auf die Transportaufgabe kleinste Einheit, die einerseits über eine bestimmte Strecke transportiert werden muss und die gegebenenfalls - je nach Anwendung - andererseits zusätzlich zu weiteren Portionen in Beziehung gesetzt werden muss, um die jeweiligen Anforderungen der Gesamtanlage, die eine oder mehrere Aufschneidevorrichtungen, insbesondere Slicer, das Bahnsystem sowie eine oder mehrere Verpackungsvorrichtungen umfasst, zu erfüllen, beispielsweise hinsichtlich der Bildung von Formaten, wie sie für die jeweils vorgesehene Verpackungsvorrichtung bereitgestellt werden müssen.

Ein Transportmover kann ein bzw. eine oder mehrere Objekte bzw. Portionen transportieren. Alternativ ist es auch möglich, dass mehrere, insbesondere zwei, Transportmover gemeinsam ein Objekt transportieren. Die Transportmover können dabei gewissermaßen gemeinsam auf dem Bahnsystem als Einheit bewegt werden. Auf diese Weise können auch größere Lasten, insbesondere schwerere und/oder flächenmäßig größere Objekte, auf dem Bahnsystem bewegt werden, als mit nur einem Transportmover.

Gemäß einer Ausführung ist vorgesehen, dass die Fixiermittel eine Lagerung oder Aufhängung für die Auflage am Transportmover umfassen, die dazu ausgebildet ist, eine Änderung der Orientierung der Auflage, insbesondere eine Neigung der Auflage, relativ zum Transportmover zuzulassen, wobei insbesondere die Lagerung eine pendelartige Lagerung und/oder die Aufhängung eine kardanische Aufhängung für die Auflage umfasst.

Auf diese Weise ist es insbesondere möglich, dass die Lagerung durch Neigen bzw. Schrägstellen der Auflage bzw. eines Trägers des Transportmovers Fliehkräfte, die auf die zu transportierende Aufnahme bzw. auf das zu transportierende Objekt wirken, kompensieren kann.

Da eine solche Lagerung bzw. Aufhängung dazu in der Lage ist, eine Aufnahme bzw. ein Objekt auf dem Transportmover zu halten, d.h. eine Maßnahme darstellt, ohne die die Aufnahme bzw. das Objekt Gefahr liefe, vom Transportmover zu fallen, stellt eine solche Lagerung bzw. Aufhängung Fixiermittel im Sinne der Erfindung dar.

Bei einer Ausführungsform ist eine fliehkraftgestützte Einrichtung zum Abgeben der Aufnahme von der Auflage vorgesehen. Dadurch können z.B. während einer Kurvenfahrt ohnehin vorhandene Kräfte zum Abgeben des Objekts genutzt werden. Dies kann beispielsweise durch eine Lücke in einer bahngestützten Leitplanke für das Objekt oder durch einen sich zeitweise öffnenden oder verschwindenden Rahmen für das Objekt oder durch Überschreitung einer Haftreibung zwischen der Auflage und einem Bodenbereich des Objekts bewirkt werden.

Bei einer Ausführungsform sind die Fixiermittel zur Erzeugung einer Haltekraft ausgebildet, die im Wesentlichen in horizontaler Richtung und/oder in einer zur Transportrichtung parallelen Ebene wirksam ist. Dadurch wird das Objekt gegen seitliches Verrutschen und ungewolltes Abgeben gesichert. Insbesondere wirken dabei die Fixiermittel selbst mit einer Kraft, die im Wesentlichen vertikal, nämlich insbesondere in Richtung der Auflage, insbesondere nach unten, gerichtet ist.

Bei einer Ausführungsform sind die Fixiermittel dazu ausgebildet, die Aufnahme durch Reibschluss zu fixieren, wobei insbesondere die Fixiermittel in Form einer reibungserhöhenden Oberfläche der rahmenfreien Auflage vorgesehen sind. Dies stellt eine einfache Art der Fixierung bei Verwendung einer rahmenfreien Auflage dar, und das Objekt wird besser auf der Auflage gesichert. Die reibungserhöhende Oberfläche kann z.B. ein elastomeres Material, ein Gummi und/oder eine raue Oberfläche umfassen.

Bei einer Ausführungsform sind die Fixiermittel dazu ausgebildet, die Aufnahme durch Anhaften zu fixieren, wobei insbesondere die Fixiermittel in Form einer Haft- oder Klebeschicht oder in Form einer oder mehrerer vereinzelter Haft- oder Klebestellen auf der rahmenfreien Auflage vorgesehen sind. Dadurch wird die Sicherung des Objekts auf der Auflage weiter verbessert.

Bei einer Ausführungsform sind die Fixiermittel dazu ausgebildet, die Aufnahme mittels Unterdruck zu fixieren, wobei insbesondere die Fixiermittel wenigstens eine, bevorzugt eine Mehrzahl verteilt angeordneter, Saugeinrichtungen umfassen. Dies stellt eine weitere Möglichkeit dar, die Sicherung des Objekts auf der Auflage in vergleichsweise einfacher und dennoch zuverlässiger Weise weiter zu verbessern.

Bei einer Ausführungsform sind die Fixiermittel zwischen einer Fixierstellung und einer Freigabestellung für die Aufnahme verstellbar. Die Fixiermittel sind hierbei also gewissermaßen schaltbar, und das Fixieren und das Abgeben des Objekts können selektiv unterstützt werden. Insbesondere sind die Fixiermittel mittels einer zumindest teilweise außerhalb des betreffenden Transportmovers, bevorzugt am Bahnsystem, vorgesehenen Betätigungseinrichtung verstellbar. Dadurch kann eine aktive Betätigungseinrichtung am Transportmover entfallen. Der Transportmover benötigt somit keine eigene Energieversorgung zum Betrieb einer Betätigungseinrichtung und die Vorrichtung wird weiter vereinfacht. Die Betätigungseinrichtung kann z.B. stationär am Bahnsystem angeordnet sein.

Bei einer Ausführungsform sind die Fixiermittel durch Passieren einer, insbesondere an der Bahn vorgesehenen, Betätigungsstelle verstellbar. Dies stellt gewissermaßen eine passive Betätigungseinrichtung dar, welche keine besonderen Schaltvorrichtungen z.B. elektromechanischer, hydraulischer oder pneumatischer Art benötigt. Eine Betätigungseinrichtung kann durch einen vorbeifahrenden Transportmover wirksam werden und dabei z.B. in Form einer Anlaufschräge am Bahnsystem ausgeführt sein, welche durch die Bewegung des Transportmovers in Zusammenwirkung mit demselben ein Verstellen der Fixiermittel bewirkt. Die Betätigungsvorrichtung kann aber auch eine Steuerung umfassen und/oder die Verstellung der Fixiermittel z.B. mechanisch und/oder elektromechanisch auslösen. Die Betätigungsstelle kann selbst verstellbar und/oder einstellbar sein.

Bei einer Ausführungsform bilden zwischen einer Fixierstellung und einer Freigabestellung verstellbare Fixiermittel zumindest einen Teil der Auflage. Dabei umfassen die Fixiermittel zum Beispiel einen oder mehrere mittels einer bahnseitigen Schräge oder Rampe in die Freigabestellung biegbare Federbügel. Dadurch lässt sich die Verstellbarkeit der Fixiermittel äußerst einfach dadurch realisieren, dass die Bewegung des Transportmovers in dem Bahnsystem ausgenutzt wird, um die verstellbaren Fixiermittel, beispielsweise elastische Elemente, zu bewegen.

Bei einer Ausführungsform umfassen die Fixiermittel eine Klemmeinrichtung, die dazu ausgebildet ist, die Aufnahme an einer oder mehreren Klemmstellen zu fixieren. Das Objekt wird somit besser an der Auflage gesichert.

Bei einer Ausführungsform ist die Klemmeinrichtung dazu ausgebildet, die Aufnahme zwischen wenigstens einem, insbesondere verstellbaren, Klemmorgan und der rahmenfreien Auflage einzuklemmen. Dadurch wird die Aufnahme bzw. das Objekt besonders sicher zwischen dem Klemmorgan und der Auflage gehalten. Der Begriff verstellbar kann hier die Bedeutung umfassen, dass sich das Klemmorgan einer zugeordneten Kontaktgeometrie der Aufnahme anpassen kann.

Bei einer Ausführungsform ist die Auflage mit einer nichtebenen Topografie als Fixiermittel versehen. Dabei weist die Topografie insbesondere eine oder mehrere Vertiefungen und/oder eine oder mehrere Erhöhungen auf. Dadurch kann die Topografie der Auflage mit einer gegebenenfalls vorhandenen, zumindest teilweise passenden Topografie an einer Unterseite der Aufnahme bzw. des Trays zusammenwirken, um die Aufnahme und somit ein darin aufgenommenes Objekt sicher an der Auflage festzulegen.

Bei einer Ausführungsform umfassen die Fixiermittel eine oder mehrere Erhöhungen, die in einer Fixierstellung über eine Auflagefläche der Auflage hinaus vorstehen, wobei insbesondere die oder jede Erhöhung zwischen einer Fixierstellung und einer Freigabestellung für die Aufnahme verstellbar und bevorzugt in oder unter die Auflagefläche versenkbar ist. Dadurch lässt sich eine Auflage mit passenden Erhöhungen bzw. zwischen den Erhöhungen vorhandenen Vertiefungen wahlweise festlegen, wodurch die Vorrichtung flexibler einsetzbar ist.

Bei einer Ausführungsform umfassen die Fixiermittel für zumindest einen Teil einer Auflagefläche der Auflage eine ein- oder mehrteilige Begrenzung oder Einfassung, die relativ zu der Auflagefläche verstellbar ist, insbesondere in zumindest im Wesentlichen vertikaler Richtung. Das Objekt kann somit ohne ein Festklemmen der Aufnahme auf der Auflage gesichert werden. Vorzugsweise ist die Auflagefläche zum Freigeben der Aufnahme anhebbar und zum Fixieren der Aufnahme absenkbar. Hierbei kann die Aufnahme gewissermaßen auf einer Art Lift angeordnet sein, mit dem die Aufnahme auf das jeweils erforderliche Niveau gebracht werden kann.

Vorzugsweise erfolgt eine Vertikalbewegung der Auflagefläche durch Beeinflussung von außen her, d.h. mittels entsprechender, insbesondere mechanischer Mittel an einem Bahnabschnitt. Bei diesen Mitteln kann es sich z.B. um Auflaufschrägen oder Rampen handeln.

Bei einer Ausführungsform sind die Fixiermittel dazu ausgebildet, die Auflage zumindest zeitweise, insbesondere für Bewegungen in Kurven, zu neigen. Dadurch kann das Objekt festgelegt werden, ohne dass Fixiermittel direkt und mechanisch an dem Objekt angreifen. Das Objekt wird somit geschont und das Abgeben und Aufnehmen des Objekts durch den Transportmover wird deutlich flexibler.

Die Neigung wird dabei insbesondere fliehkraftgestützt hervorgerufen. Dies kann z.B. durch ein mit einer neigbar gelagerten Auflage, insbesondere fest, gekoppeltes Pendel erreicht werden, dessen Pendelmasse bei einer Kurvenfahrt aufgrund der Fliehkraft nach außen gedrängt wird, wobei die Pendelmaße insbesondere unterhalb der Neigungsachse angeordnet ist. Eine Neigung der Auflage kann alternativ oder zusätzlich zum Abgeben des Objekts von der Auflage in Verbindung mit der Schwerkraft des Objekts genutzt werden. Des Weiteren kann die Auflage bzw. der Träger zumindest in Teilbereichen des Bahnsystems auch durch entsprechende Führungen geneigt werden. Beispielsweise in Kurven kann eine Auflage bzw. ein Träger auf eine leicht überhöhte Führung auflaufen und dadurch zum Kompensieren von Fliehkräften nach innen geneigt werden.

Eine Neigung der Auflage kann nicht nur durch Fixiermittel, sondern z.B. alternativ oder zusätzlich auch durch einen Träger und/oder die Auflage selbst bewirkt werden. Dazu ist z.B. ein Träger an dem betreffenden Transportmover beispielsweise pendelnd gelagert oder kardanisch aufgehängt, so dass die Lagerung bzw. Aufhängung Fliehkräfte auf das zu fördernde Objekt durch Neigen bzw. Schrägstellen des Trägers kompensieren kann.

Bei einer Ausführungsform sind die Fixiermittel durch eine zumindest bereichsweise Verformbarkeit der Auflage gegeben, wobei insbesondere in der Auflage ein Bett für die Aufnahme formbar ist, insbesondere durch Auflegen und/oder Eindrücken der Aufnahme auf bzw. in die Auflage. Dadurch lässt sich die Auflage an das Objekt anpassen. Das Bett ist insbesondere eine z.B. muldenartige Vertiefung, in die das Objekt aufgenommen und durch die das Objekt festgehalten und/oder fixiert wird. Dadurch wird ein sicherer Halt des Objekts, insbesondere während einer Kurvenfahrt des Transportmovers, gewährleistet.

Bei einer Ausführungsform ist einer bahngestützten Auflage für die Aufnahme als Fixiermittel eine Führung für die Aufnahme zugeordnet. Dadurch braucht ein zum Schieben oder Ziehen der Aufnahme gesteuerter Transportmover weder für die Auflage noch für die Führung der Aufnahme bzw. des Trays zu sorgen. Dadurch lässt sich der Transportmover einfacher ausführen.

Bei einem nicht zur Erfindung gehörenden Beispiel ist die Auflage von wenigstens einem von zwei aufeinanderfolgend bewegten Transportmovern gebildet ist, wobei zumindest einer der Transportmover einen Auflagebereich für eine zwischen den Transportmovern gehaltene Aufnahme aufweist, wobei insbesondere zumindest einer der Transportmover eine Begrenzung für die Aufnahme bildet oder aufweist. Die Transportmover lassen sich so technisch einfach und damit kostengünstiger ausführen. Hierbei können die Fixiermittel durch die Steuereinrichtung dadurch bereitgestellt werden, dass die Steuereinrichtung die Transportmover auf dem richtigen Abstand hält. Alternativ oder zusätzlich können die Fixiermittel von Auflagebereichen und/oder deren gegebenenfalls vorhandenen Begrenzungen gebildet werden.

Hierbei können die Auflage und/oder die Begrenzung von den Transportmovern gemeinsam gebildet sein, wodurch die Ausgestaltung der einzelnen Transportmover weiter vereinfacht wird und das Objekt dennoch zuverlässig gehalten werden kann.

Außerdem kann die Begrenzung für unterschiedlich große und/oder unterschiedlich geformte Aufnahmen ausgebildet sein. Die Vorrichtung zum Bewegen von Objekten ist dadurch flexibler einsetzbar, wobei z.B. auch ohne Umrüstung der Transportmover Objekte mit unterschiedlichen Aufnahmen, insbesondere mit unterschiedlich geformten Aufnahmen oder mit unterschiedlichen Formaten von Aufnahmen, bewegt und dabei zuverlässig gesichert werden können. Dabei weist die Begrenzung beispielsweise eine quadratische oder rechteckige Grundform mit abgeschrägten oder abgerundeten Eckbereichen auf.

Bei einer Ausführungsform der Erfindung umfassen die Fixiermittel für zumindest einen Teil einer Auflagefläche der Auflage eine ein- oder mehrteilige Begrenzung oder Einfassung, die zwischen einer Fixierstellung und einer Freigabestellung relativ zu der Auflagefläche verschwenkbar oder kippbar ist. Dabei verläuft die Kipp- bzw. Schwenkachse insbesondere parallel zur Auflagefläche und insbesondere parallel zur Bewegungsrichtung des Transportmovers. Das Kippen lässt sich insbesondere durch bahnseitig angeordnete Betätigungsmittel bewirken. Im gekippten Zustand ist zumindest eine Öffnung oder zumindest ein Durchgang zwischen der Auflagefläche und der Begrenzung bzw. Einfassung vorhanden, durch welche hindurch die Aufnahme übergeben werden kann. Insbesondere kann erreicht werden, dass durch einen Kippvorgang auf gegenüberliegenden Seiten der Auflagefläche zwei Öffnungen bzw. Durchgänge für das zu transportierende Objekt entstehen.

Erfindungsgemäß ist außerdem zumindest ein Paar von zusammenwirkenden Transportmovern vorgesehen, die gemeinsam mit ihren Aufnahmebereichen zumindest vorübergehend einen gemeinsamen, seitlich auskragenden Auflagebereich für die Aufnahme bilden. Zumindest vorübergehend befinden sich die Auflagebereiche jeweils in einer Auskragposition, in der sie seitlich auskragen. Die Auflagebereiche sind also jeweils seitlich versetzt zu einem Stator des Bahnsystems, zu einem Läufer des Transportmovers und/oder zu einer Führung für den Läufer angeordnet.

Insbesondere ist der Auflagebereich hierbei bezüglich der Bahn bzw. des Läufers des Transportmovers ausgekragt. Der Auflagebereich ist vorzugsweise ein Trag-, Lastaufnahme- bzw. Lastabgabebereich, also ein Bereich, in welchem die Aufnahmen, insbesondere die Trays, aufgenommen, gehandhabt, getragen und/oder abgegeben werden. Vorzugsweise handelt es sich bei dem Auflagebereich um eine Aufnahmefläche für die Trays.

Insbesondere kann die Auflage nur an einer einzigen Seite auskragen. Grundsätzlich ist es jedoch auch denkbar, dass die Auflage mehrere Auflagebereiche, welche seitlich auskragen, aufweist. Aufgrund des Auflagebereichs ist die Auflage vorzugsweise unsymmetrisch bezüglich der Bahn, insbesondere des Stators, bzw. des Läufers.

Das gemäß der Erfindung vorgesehene wenigstens eine Mover-Paar ist als eine Art "Tandem" wirksam, um gemeinsam einen Auflagebereich für Trays bereitzustellen.

Es hat sich gezeigt, dass ein solches Transportprinzip besonders effizient bei Transportmovern mit seitlich auskragendem Auflagebereich anwendbar ist. Ein gemeinsamer, seitlich auskragender Auflagebereich kann dabei entweder nur an einer Seite des Mover-Tandems vorgesehen sein, wobei alternativ die Auflagen auch zu beiden Seiten auskragen können.

Die beiden Transportmover können erfindungsgemäß zur Abgabe von Trays derart relativ zueinander bewegbar sein, dass die Auflagebereiche unter den Trays weg bewegbar sind. Die Relativbewegung erfolgt bevorzugt derart schnell, dass unter Ausnutzung des Trägheitsprinzips den Trays gewissermaßen "der Boden unter den Füßen weggezogen" wird. Beispielsweise kann einfach durch Auseinanderbewegen der beiden Mover zwischen den zuvor den gemeinsamen Auflagebereich bildenden Einzel-Auflagebereichen ein Zwischenraum entsteht. In Abhängigkeit von den Eigenschaften der Trays können diese beim Auseinanderbewegen der Mover im Wesentlichen ohne seitlichen Versatz nach unten fallen, wenn die Auflagebereiche ausreichend schnell unter den Trays weg bewegt werden.

Gemäß einer weiteren Ausgestaltung der Erfindung kann zumindest einer der Auflagebereiche der beiden Transportmover relativ zu einer mit den Trays bei der Abgabe zusammenwirkenden Abgabehilfe bewegbar sein. Die Abgabehilfe kann z.B. als Abstreifer, als Abräumer, als Ablöser und/oder als Lagefixierer ausgebildet sein.

Insbesondere ist vorgesehen, dass die Abgabehilfe an dem anderen Transportmover angebracht und/oder gemeinsam mit dem anderen Transportmover bewegbar ist. Derartige Abgabehilfen können verhindern, dass sich die Trays ungewollt mit dem betreffenden Mover von einer gewünschten Abgabeposition weg bewegen, wenn die beiden Mover auseinanderbewegt werden.

Gemäß einer weiteren Ausführungsform sind die beiden Transportmover durch eine längenveränderliche Koppeleinrichtung miteinander gekoppelt. Durch eine derartige Koppeleinrichtung kann insbesondere eine größere Bewegungsstabilität erreicht werden, was einen geringeren Einfluss auf die gleichzeitig von zwei Transportmovern transportierten Trays bedeutet, die anderenfalls durch Relativbewegungen zwischen den beiden Transportmovern gestört würden.

Die Koppeleinrichtung kann beispielsweise ein oder mehrere teleskopierbare Koppelelemente umfassen. Bevorzugt ist die Koppeleinrichtung an beiden Transportmovern jeweils an zumindest einer Stelle drehbar oder schwenkbar gelagert.

Im Transportbetrieb können die beiden Transportmover derart gesteuert und in dem Bahnsystem bewegt werden, dass sich der Abstand der beiden Auflagebereiche nicht verändert. Dabei können sich die von den Auflagebereichen gebildeten "Teilauflagen" mit einem geringen Abstand gegenüberliegen. Die Teilauflagen können sich alternativ aber auch überlappen oder berühren.

Ein Bahnabschnitt kann wenigstens eine, insbesondere zu jedem Zeitpunkt oder zumindest zeitweise rahmenfreie, Auflage für zumindest einen Teil einer, insbesondere schalenartiger, Aufnahme zum Aufnehmen wenigstens eines zu bewegenden Objekts aufweisen, insbesondere für eine Verpackung, bevorzugt für ein Tray zum Aufnehmen zumindest einer Portion, und wobei die auf der Auflage des Bahnabschnitts aufliegende Aufnahme mittels zumindest eines Transportmovers entlang der Bahn bewegbar ist, wobei insbesondere der Transportmover zum Schieben und/oder Ziehen der Aufnahme ausgebildet ist.

Gemäß diesem Aspekt der Erfindung erfolgt die Abstützung der Aufnahmen durch die Bahn, während weiterhin die Transportmover für die Bewegung der Aufnahmen entlang der Bahn sorgen, d.h. den Aufnahmen ihre Bewegung durch die Transportmover aufgeprägt wird.

Fixiermittel für die Aufnahmen können ebenfalls von der Bahn bereitgestellt werden. Insbesondere kann im Bereich der Auflage eine Führung für die Aufnahmen vorgesehen sein, z.B. in Form eines Winkelblechs, dessen einer Schenkel als Auflage und dessen anderer Schenkel als Führung dient. Die Transportmover müssen hierbei folglich keine Fixieraufgaben übernehmen, sondern brauchen lediglich für das Bewegen der Aufnahmen zu sorgen. Alternativ kann auf bahngestützte Fixiermittel auch verzichtet werden, wenn die Transportmover z.B. derart ausgebildet sind, dass sie nicht nur für das Bewegen der Aufnahmen sorgen, sondern gleichzeitig sicherstellen können, dass die Aufnahmen auf der Bahn verbleiben. Beispielsweise können an den Transportmovern vorgesehene Mittel zum Schieben und/oder Ziehen der auf der Bahn lediglich aufliegenden Aufnahmen zusätzlich als Halte-, Klemm- oder Eingriffsmittel ausgebildet sein, welche die Aufnahmen festhalten und in diesem Sinne als Fixiermittel wirksam sind.

Des Weiteren kann vorgesehen sein, dass zusätzlich zu der Auflage Fixiermittel vorgesehen sind, die zum zumindest zeitweisen Fixieren der Aufnahme auf der Auflage ausgestaltet sind. Die Fixiermittel können am Transportmover und/oder am Bahnabschnitt vorgesehen sein. Wenn bahngestützte Fixiermittel vorgesehen sind, dann können diese insbesondere eine Führung umfassen.

Wenn gemäß diesem Aspekt der Erfindung eine bahnseitige Auflage vorgesehen ist, dann werden die oben angegeben erfindungsgemäßen Vorteile also auf der statischen Seite des Bahnsystems verwirklicht. Insbesondere können alle vorstehend und nachstehend in Verbindung mit dem Aspekt der transportmoverseitigen Auflage erwähnten Ausgestaltungen auch bei dieser bahnseitigen Auflage vorgesehen werden.

Die Aufgabe der Erfindung wird ferner gelöst durch ein System mit einer erfindungsgemäßen Vorrichtung und mit wenigstens einer, insbesondere schalenartigen, Aufnahme zum Aufnehmen wenigstens eines mittels der Vorrichtung zu bewegenden Objekts.

Dabei kann gemäß eine Ausführungsform vorgesehen sein, dass die Aufnahme, insbesondere deren Unterseite, und die Auflage zusammenwirkende Fixiermittel aufweisen, die derart ausgestaltet sind, dass durch das Zusammenwirken der Fixiermittel die Aufnahme zumindest zeitweise auf der Auflage fixiert wird.

Dieses erfindungsgemäße System lässt sich ebenfalls im Sinne der in der Beschreibung vorstehend und nachstehend genannten Ausführungsformen der Vorrichtung vorteilhaft weiterbilden.

Bei einer Ausführungsform sind die Fixiermittel als Formschlussmittel ausgebildet, wodurch eine sichere Festlegung der Aufnahme gewährleistet wird. Die Trays bzw. die Verpackungsunterteile und die Transportmover können dabei aufeinander abgestimmt sein, d.h. die Form der Trays ist von vornherein bekannt.

Bei einer Ausführungsform sind die Auflage und die Aufnahme mit zumindest bereichsweise zusammen passenden nichtebenen Topografien versehen, die insbesondere jeweils eine oder mehrere Vertiefungen und/oder eine oder mehrere Erhöhungen aufweisen. Dabei können beispielsweise diskrete Vorsprünge, die z.B. punktförmig oder langgestreckt ausgeführt sind, auf der Auflage mit entsprechenden Vertiefungen auf einer Tray-Unterseite in Eingriff gelangen.

Bei einer Ausführungsform ist die Aufnahme dazu ausgebildet, zumindest bereichsweise die Auflage zu umgreifen und/oder zu hintergreifen und/oder seitlich an der Auflage vorbei unter eine Auflagefläche der Auflage zu greifen. Die Aufnahme wird somit sicher an der Auflage festgelegt.

Weitere Ausführungsformen sind in den abhängigen Ansprüchen, der Beschreibung sowie der Zeichnung gezeigt.

Alle hier offenbarten Maßnahmen zum Fixieren von Aufnahmen auf den Auflagen der Transportmover können auch bei einem nicht zur Erfindung gehörenden Beispiel zum direkten Fixieren der Objekte auf den Transportmovern, also insbesondere auf den Auflagen, auf Trägern bzw. auf von den Auflagen bzw. Trägern bereitsgestellten Oberflächen bzw. Auflageflächen, eingesetzt werden. Bei diesem Beispiel ist also ein mittelbarer Transport von Objekten mittels Aufnahmen oder Trays nicht zwingend. Anders ausgedrückt können die Aufnahmen bzw. Trays selbst als zu transportierende Objekte angesehen werden.

Die Erfindung wird nachfolgend lediglich beispielhaft unter Bezugnahme auf die schematische Zeichnung erläutert.
- Fig. 1: zeigt einen Transportmover einer erfindungsgemäßen Vorrichtung mit einer rutschfesten Oberfläche.
- Fig. 2: zeigt eine Auflage eines Transportmovers mit Klemmorganen.
- Fig. 3: zeigt eine Auflage mit einer Topografie zum Sichern eines Trays.
- Fig. 4: zeigt ein Bahnsystem mit einer Auflage für ein Tray.
- Fig. 5: zeigt zwei Transportmover, die gemeinsam ein Tray halten.
- Fig. 6: zeigt einen Transportmover mit einer neigbaren Auflage.
- Fig. 7: zeigt zwei Transportmover, die gemeinsam eine Auflage und eine Begrenzung für ein Tray bilden.
- Fig. 8: zeigt die Transportmover der Fig. 7 in einer Freigabestellung.
- Fig. 9: zeigt eine weitere Ausführungsform von zwei Transportmovern, die gemeinsam eine Auflage und eine Begrenzung für ein Tray bilden.
- Fig. 10: zeigt zwei Transportmover, die gemeinsam eine Auflage und eine Begrenzung für unterschiedliche Trays bilden.
- Fig. 11: zeigt die zwei Transportmover der Fig. 10 in einer Freigabestellung.
- Fig. 12: zeigt die Transportmover der Fig. 10 und 11 in einer Seitenansicht.
- Fig. 13: zeigt eine zweiteilige Ausführungsform einer Auflage.
- Fig. 14: zeigt einen Transportmover mit einer anhebbaren Auflage für ein Tray.
- Fig. 15: zeigt einen Transportmover mit Federbügeln als Auflage für ein Tray.
- Fig. 16: zeigt den Transportmover der Fig. 15 in einer Ansicht von oben.
- Fig. 17: zeigt einen Transportmover mit einer schwenkbaren Begrenzung für ein Tray.
- Fig. 18: zeigt den Transportmover der Fig. 17 mit verschwenkter Begrenzung.
- Fig. 19: zeigt eine verformbare Auflage.
- Fig. 20: zeigt die verformbare Auflage der Fig. 19 nach einer Verformung durch seitlich angreifende Backen.
- Fig. 21 und 22: zeigen Draufsichten auf zwei weitere Ausführungsformen der Erfindung, die jeweils einen "Tandem-Mover" betreffen.

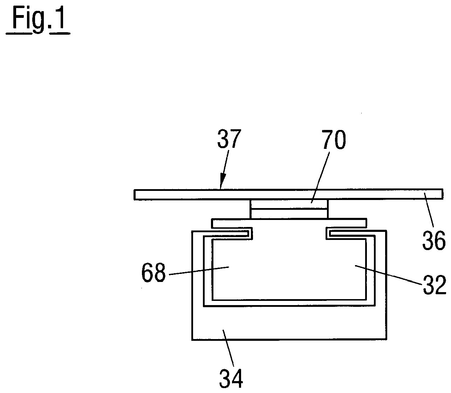

In Fig. 1 ist ein Transportmover 32 mit einer Auflage 36 dargestellt, der in einem Bahnsystem 34 gelagert ist. Der Transportmover 32 wird über einen Magneten, der an dem Transportmover 32 angeordnet ist, mittels veränderlicher Magnetfelder durch das Bahnsystem 34 bewegt. Dabei folgt der Transportmover 32 einer Bewegungsbahn, die senkrecht zur Bildebene der Fig. 1 verläuft. In Fig. 1 ist also das Bahnsystem 34 geschnitten dargestellt. Der Transportmover 32 umfasst einen Läufer 68 zur Führung des Transportmovers 32 in dem Bahnsystem 34 sowie einen Träger 70. Der Träger 70 weist eine Auflage 36 zum Auflegen einer nicht gezeigten Aufnahme auf. Eine Oberfläche 37 der Auflage 36 weist ein rutschfestes Gummi auf, um ein Objekt auf der Auflage 36 gegen seitliches Verrutschen, z.B. infolge einer Fliehkraft während einer Kurvenfahrt, zu sichern.

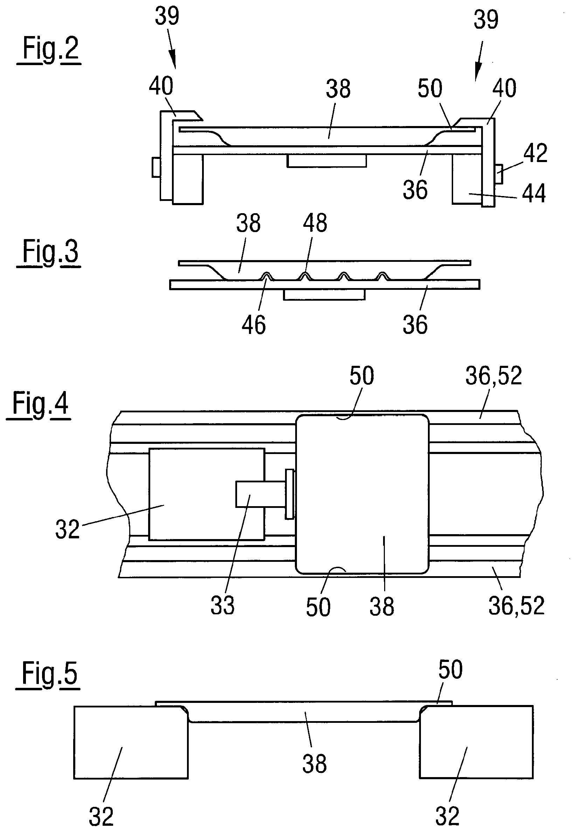

Fig. 2 zeigt eine Auflage 36 eines nicht dargestellten Transportmovers 32, die eine als Tray 38 ausgeführte Aufnahme für ein nicht dargetelltes Objekt trägt. Die Auflage 36 weist an ihren seitlichen Enden zwei Klemmeinrichtungen 39 auf, die dazu ausgestaltet sind, das Tray 38 auf der Auflage 36 zu fixieren. Eine Klemmeinrichtung 39 weist ein Klemmorgan 40 auf, welches in vertikaler Richtung zwischen einer Fixierstellung (rechts im Bild dargestellt) und einer Freigabestellung (links im Bild dargestellt) verstellbar ist. Das Klemmorgan 40 klemmt das Tray 38 über einen Rand 50 des Trays 38 gegen die Auflage 36, wobei eine Klemmkraft in vertikaler Richtung aufgebracht wird. Die Klemmeinrichtung 39 umfasst außerdem eine Betätigungsnase 42, die fest mit dem Klemmorgan 40 verbunden ist. Über die Betätigungsnase 42 kann das Klemmorgan 40 von einer bahnseitig angeordneten Betätigungseinrichtung, z.B. einer Anlaufschräge, verstellt werden. Die Klemmeinrichtung 39 umfasst ferner eine bistabile Feststelleinrichtung 44, mittels welcher das Klemmorgan 40 in zwei unterschiedlichen Stellungen, nämlich der Fixierstellung und der Freigabestellung, gegenüber der Auflage 36 festgelegt werden kann.

In Fig. 3 ist eine Auflage 36 dargestellt, welche eine nichtebene Topografie in Form von Erhöhungen 46 aufweist. Auf der Auflage 36 ist ein Tray 38 mit Vertiefungen 48 angeordnet. Dabei greifen die Erhöhungen 46 der Auflage in die passend geformten Vertiefungen 48 des Trays 38, um das Tray 38 auf der Auflage 36 gegenüber einer Bewegung in horizontaler Richtung zu sichern.

In Fig. 4 ist ein Tray 38 in einer Draufsicht gezeigt, das mit seinen Rändern 50 auf zwei Schienen einer gleichzeitig auch eine Auflage für das Tray 38 bildenden Führung 52 aufliegt. Die Führung 52 führt das Tray 38 bei der Bewegung in einer im Bild horizontalen Richtung, also entlang der Führungsschienen. Das Tray 38 ist durch die Führung 52 gegen ein Verlassen der Bewegungsbahn, also gegenüber einer Bewegung in im Bild vertikaler Richtung, gesichert. Zwischen den Schienen der Führung 52 ist ein Transportmover 32 dargestellt. Der Transportmover 32 ist in der im Bild horizontalen Richtung entlang einer Bewegungsbahn beweglich. Dabei überragt der Transportmover 32 das Tray 38 in der Höhe, also in Richtung aus der Bildebene heraus, oder er überragt zumindest eine Ausprägung des Trays in der Höhe. Der Transportmover 32 kann also das Tray 38 entlang der Führung 52 und entlang seiner Bewegungsbahn vor sich herschieben, um das Tray 38 zu bewegen. Hierzu ist der Transportmover 32 mit Schiebemitteln 33 ausgestattet. Alternativ oder zusätzlich kann der Transportmover 32 Mittel zum Ziehen des Trays 38 entlang der Führung 52, wie z.B. ein das Tray 38 hintergreifendes Element, aufweisen. In diesem Fall kann der Transportmover 32 das Tray 38 hinter sich herziehen, um das Tray 38 entlang der Führung 52 zu bewegen.

Fig. 5 zeigt ein Tray 38, das von zwei Transportmovern 32 getragen wird. Die Transportmover 32 bilden also gemeinsam eine Auflage für das Tray 38. Dabei liegt das Tray 38 mit seinen Rändern 50 jeweils auf den Transportmovern 32 oder auf dafür vorgesehenen Anbauteilen der Transportmover 32 auf. Das Tray 38 ist mit einer Tiefenausprägung zwischen den Transportmovern 32 angeordnet und festgehalten. Das Tray 38 ist also relativ zu den Transportmovern 32, die sich beim Transport des Trays 38 synchron und mit im Wesentlichen konstantem Abstand bewegen, in horizontaler und vertikaler Richtung gesichert. Die Transportmover 32 werden von einer nicht gezeigten Steuereinrichtung zur Bewegung in der im Bild horizontalen Richtung angesteuert, die dafür sorgt, dass zum Halten des Trays 38 der Abstand zwischen den Transportmovern 32 im Wesentlichen gleich bleibt. Zum Freigeben oder Abgeben des Trays 38 wird der Abstand vergrößert. Wird dabei der Abstand um einen geringen Betrag, wie z.B. wenige Millimeter, vergrößert, kann das Tray 38 weiterhin mit seinen Rändern 50 auf den Transportmovern 32 aufliegen, aber in vertikaler Richtung (also nach oben) oder in der Richtung senkrecht zur Bildebene (also quer zur Bewegungsbahn) von den Transportmovern 32 abgegeben werden. So kann z.B. das Tray 38 beim Abgeben zwischen den Transportmovern 32 in einer Kurve in der Richtung senkrecht zur Bildebene herausrutschen oder an einer beliebigen Stelle im Bahnsystem 34 mittels einer Ausstoßeinrichtung seitlich herausgeschoben werden. Alternativ kann der Abstand auch um einen großen Betrag vergrößert werden, so dass das Tray 38 nach unten fallen oder auch nach oben abgehoben werden kann, um von den Transportmovern 32 abgegeben zu werden.

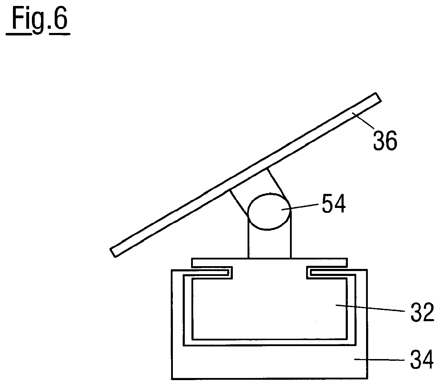

Fig. 6 zeigt einen in einem Bahnsystem 34 geführten Transportmover 32, dessen Auflage 36 um ein Neigungslager 54 nach links und rechts neigbar ist. Die Neigungsachse des Neigungslagers 54 verläuft parallel zur Bewegungsbahn des Transportmovers 32, also in der Darstellung senkrecht zur Bildebene, und durch den Mittelpunkt des Neigungslagers 54. Die Auflage 36 kann also z.B. zum Ausgleich einer Fliehkraft geneigt werden, die bei einer Kurvenfahrt des Transportmovers 32 auf ein von der Auflage 36 getragenes, nicht gezeigtes Objekt wirkt. Die Neigung der Auflage 36 kann dabei z.B. durch im Neigungslager 54 angeordnete Antriebsmittel des Transportmovers 32 oder durch eine mit der Auflage 36 fest verbundene Pendelmasse bewirkt werden. Die Pendelmasse und der Gesamtschwerpunkt des neigbaren Vorrichtungsteils liegen dabei bevorzugt unterhalb der Neigungsachse, so dass bei einer Kurvenfahrt des Transportmovers 32 die Auflage 36 in Richtung des Inneren der Kurve geneigt wird.

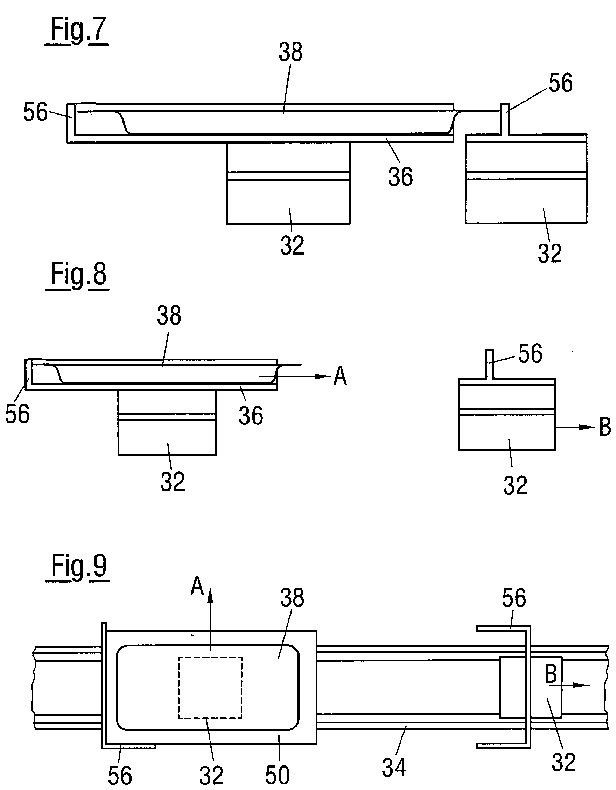

In Fig. 7 sind zwei Transportmover 32 in einer geschnittenen Seitenansicht dargestellt, die im Bild horizontal beweglich in einem nicht gezeigten Bahnsystem 34 angeordnet sind. Der links dargestellte Transportmover 32 weist eine Auflage 36 zum Tragen eines Trays 38 auf. Das Tray 38 ist durch Begrenzungen 56 gegenüber einer horizontalen Verschiebung relativ zu den Transportmovern 32 gesichert. Dabei ist eine, nämlich die rechts dargestellte, der Begrenzungen 56 an dem rechts dargestellten Transportmover 32 ausgebildet. Die Transportmover 32 befinden sich relativ zueinander in einer Fixierstellung und werden während eines Transports des Trays 38 von einer nicht gezeigten Steuereinrichtung auf im Wesentlichen dem gleichen Abstand zueinander gehalten. Die Transportmover 32 fixieren so gemeinsam das Tray 38 beim Transport.

In Fig. 8 sind die Transportmover 32 der Fig. 7 in einer Freigabestellung dargestellt. Zum Erreichen der Freigabestellung wurde der rechts dargestellte Transportmover 32 relativ zu dem links dargestellten Transportmover 32 nach rechts verfahren und der Abstand zwischen den beiden Transportmovern 32 vergrößert. Die Begrenzung 56 des rechts dargestellten Transportmovers 32 sichert in dieser Stellung das Tray 38 nicht. Das Tray 38 kann also von dem links dargestellten Transportmover 32 in der Abgaberichtung A, also in horizontaler Richtung nach rechts, abgegeben werden. Die Abgaberichtung A verläuft hier parallel zu der Transportrichtung B der Transportmover 32. Es ist aber z.B. auch eine Abgabe nach oben denkbar, insbesondere auch deshalb, da sich das Tray 38 in dieser Situation besonders gut mit Hilfsmitteln erfassen, insbesondere untergreifen, lässt.

Fig. 9 zeigt eine alternative Ausführungsform von zwei Transportmovern 32, die dazu ausgestaltet sind, gemeinsam ein Tray 38 zu bewegen. Die Transportmover 32 bewegen sich in einem Bahnsystem 34 entlang einer Transportrichtung B und sind in Fig. 9 in einer Freigabestellung dargestellt. Der links gestrichelt angedeutete (weil verdeckte) Transportmover 32 trägt ein Tray 38 mit einem Rand 50 und weist eine L-förmige Begrenzung 56 für das Tray 38 auf. In der gezeigten Freigabestellung kann das Tray 38 in der Abgaberichtung A, also quer zur Transportrichtung B, z.B. mittels einer Fliehkraft bei einer Kurvenfahrt des links dargestellten Transportmovers 32 abgegeben werden. Der rechts dargestellte Transportmover 32 weist ebenfalls eine Begrenzung 56 auf, welche in einer nicht gezeigten Fixierstellung gemeinsam mit der Begrenzung 56 des links dargestellten Transportmovers 32 das Tray 38 gegenüber einer Bewegung quer zur Transportachse B relativ zu dem Bahnsystem 34 und gegenüber einer Bewegung parallel zur Transportrichtung B relativ zu den Transportmovern 32 sichert.

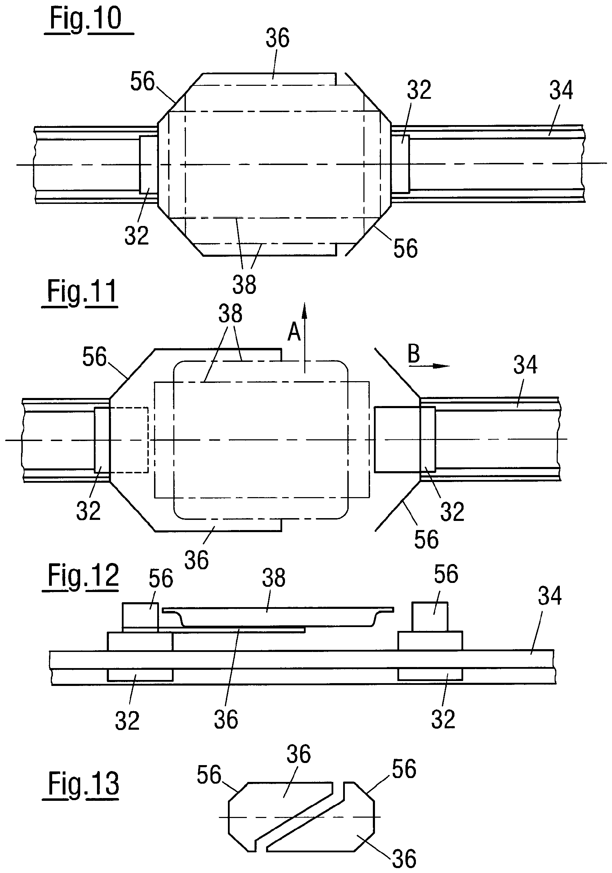

Fig. 10 zeigt eine alternative Ausführungsform von zwei Transportmovern 32, die dazu ausgestaltet sind, ein Tray 38 zu tragen und zu sichern. Die Transportmover 32 sind in einem Bahnsystem 34 beweglich angetrieben und geführt und in Fig. 10 in einer Fixierstellung dargestellt. Der links dargestellte Transportmover 32 weist eine Auflage 36 für das Tray 38 und eine Begrenzung 56 auf. Der rechts dargestellte Transportmover 32 weist ebenfalls eine Begrenzung 56 auf. Mit Strichpunktlinien sind zwei unterschiedliche Formate von Trays 38 angedeutet, die auf der Auflage 36 aufliegen und von den Begrenzungen 56 gesichert werden. Die Begrenzungen 56 weisen eine rechteckige Grundform mit abgeschrägten Eckbereichen auf, so dass unterschiedlich große bzw. unterschiedlich geformte Trays 38 zuverlässig auf der Auflage 36 gesichert werden können. Eine Formatumstellung kann dabei sehr einfach vorgenommen werden, indem unter anderem die Abstände der Transportmover 32 im Bahnsystem 34 mittels der Steuereinrichtung entsprechend angepasst werden.

In Fig. 11 sind die Transportmover 32 der Fig. 10 in einer Freigabestellung dargestellt. Die Transportmover 32 weisen also in Bezug auf die Fixierstellung der Fig. 10 einen größeren Abstand zueinander auf. Ein Tray 38 ist dadurch nicht länger durch die Begrenzungen 56 auf der Auflage 36 gesichert. Das Tray 38 kann also in einer Abgaberichtung A quer zur Transportrichtung B der Transportmover 32 abgegeben werden.

Die Ausführungsform der Fig. 10 und 11 ist in Fig. 12 in einer Seitenansicht gezeigt. Die zwei Transportmover 32 sind horizontal entlang des Bahnsystems 34 beweglich und in der Freigabestellung dargestellt. Das Tray 38 liegt auf der Auflage 36 des links dargestellten Transportmovers 32 auf. Die Begrenzungen 56 der Transportmover 32 sichern das Tray 38 in dieser Freigabestellung nicht, so dass das Tray 38 in einer zur Bildebene senkrechten Richtung abgegeben werden kann.

Fig. 13 zeigt in einer Draufsicht eine Ausführungsform einer zweiteiligen Auflage 36, von der jeweils ein Teil von einem jeweiligen im Bild verdeckten Transportmover 32 getragen wird. Die Auflage 36 wird durch in Bezug auf die Bewegungsrichtung vorne und hinten angeordnete Begrenzungen 56 für ein nicht gezeigtes Tray 38 begrenzt. Die zwei Teile der Auflage 36 sind mit ihren jeweiligen Transportmovern 32 relativ zueinander beweglich und bilden komplementäre Kontaktlinien auf ihrer dem jeweils anderen Teil zugewandten Seite. Diese komplementären Kontaktlinien bzw. die Teile der Auflage 36 sind derart schräg ausgebildet, dass ein z.B. rechteckiges Tray 38 auf der Auflage 36 getragen wird, obwohl die Teile der Auflage 36 einen Abstand zueinander aufweisen. Ein Herunterfallen des Trays 38 kann somit auch in einer Freigabestellung der Transportmover 32 sicher verhindert werden.

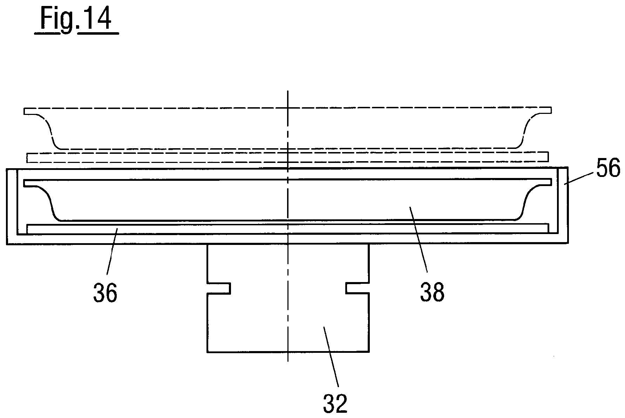

In Fig. 14 ist ein Transportmover 32 mit einer Auflage 36 für ein Tray 38 in einer Schnittansicht gezeigt, der sich in einer Transportrichtung B senkrecht zur Bildebene entlang eines nicht dargestellten Bahnsystems 34 bewegt. Die Auflage 36 und das Tray 38 sind von einer Begrenzung 56 umgeben, so dass das Tray 38 gegen eine Bewegung in horizontaler Richtung gesichert ist. Die Auflage 36 ist in eine gestrichelt angedeutete Freigabestellung anhebbar und aus dieser heraus absenkbar. Das Tray 38 kann also durch Anheben der Auflage 36 aus dem Wirkbereich der Begrenzung 56 herausgehoben werden, um in der Freigabestellung abgegeben werden zu können. Mit anderen Worten bildet die Begrenzung 56 einen zeitweise vorhandenen Rahmen für das Tray 38, der bei Anheben der Auflage 36 verschwindet.

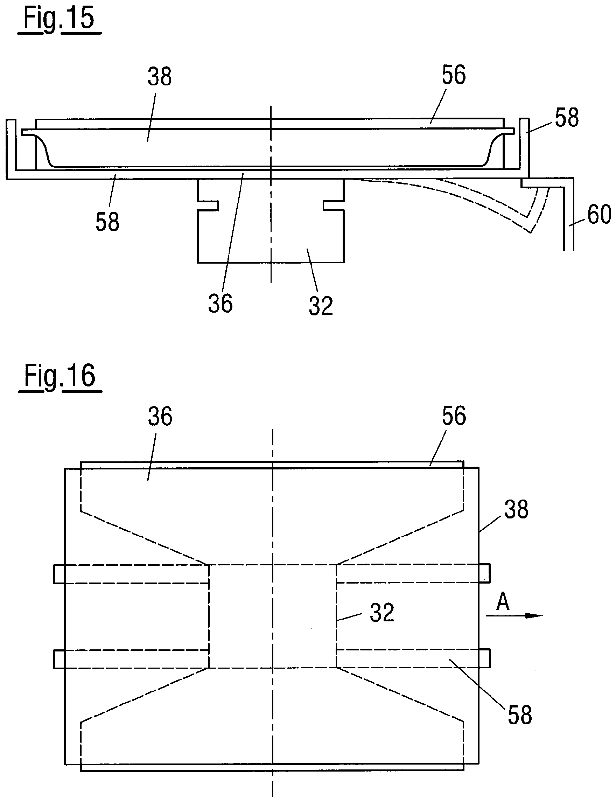

Fig. 15 zeigt einen ebenfalls senkrecht zur Bildebene beweglichen Transportmover 32 in einer Schnittansicht, der auf einer Auflage 36 ein Tray 38 trägt. Die Auflage 36 weist Federbügel 58 auf, die durch eine bahnseitige Betätigungseinrichtung 60, wie z.B. eine Anlaufschräge oder Rampe, nach unten verbiegbar sind, wie es auf der rechten Seite im Bild gestrichelt angedeutet ist. In ihrer Ausgangsstellung bzw. in der Fixierstellung begrenzen die Federbügel 58 das Tray 38 gegenüber einer Bewegung in horizontaler Richtung quer zur Transportrichtung B des Transportmovers 32. In der gestrichelt angedeuteten Freigabestellung ist das Tray 38 nicht gegenüber einer solchen Bewegung gesichert und kann quer zur Transportrichtung B abgegeben werden. Das Tray 38 ist durch eine Begrenzung 56 gegenüber einer Bewegung entlang der Transportrichtung B relativ zu dem Transportmover 32 gesichert.

Fig. 16 zeigt den Transportmover 32 der Fig. 15 in einer Draufsicht. Die von dem Tray 38 verdeckten Elemente des Transportmovers 32 sind gestrichelt angedeutet. Der Transportmover 32 bildet eine Auflage 36, wobei die Federbügel 38 einen Teil der Auflage 36 bilden, während der übrige Teil der Auflage 36 starr ausgeführt ist. Das Tray 38 ist gegenüber einer Bewegung in der im Bild vertikalen Richtung mittels Begrenzungen 56 festgelegt. Nach Verformung der Federbügel 58 in eine Freigabestellung kann das Tray 38 in der Abgaberichtung A quer zur Transportrichtung B, also in im Bild horizontaler Richtung, abgegeben werden. Die Federbügel 58 können wie gezeigt in Querrichtung und/oder in Längsrichtung angeordnet sein, wobei jeweils auf einer Seite ein oder mehrere Federbügel 58 angeordnet sein können. Die Federbügel 58 des Transportmovers 32 können auch allein als Auflage 36 und/oder als Träger für das Tray 38 dienen und können durch einen externen, also bahnseitigen, Krafteinfluss nach unten gebogen werden, so dass das Tray 38 von der Auflage 36 abgeschoben werden kann. Es versteht sich, dass in der Ausführungsform der Fig. 15 und 16 die links dargestellten Federbügel 58 ebenso verbogen werden können, so dass das Tray 38 nach links abgegeben bzw. abgeschoben werden kann.

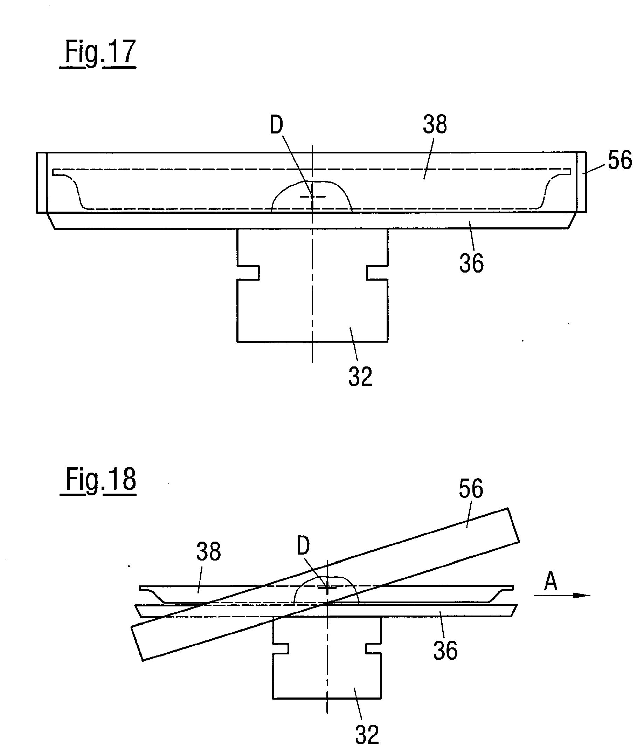

In Fig. 17 ist ein Transportmover 32 mit einer Auflage 36 für ein Tray 38 gezeigt, welches von einer Begrenzung 56 umgeben und deshalb gestrichelt angedeutet ist. Die Begrenzung 56 ist um eine Drehachse D, welche senkrecht zur Bildebene und Parallel zur Transportrichtung B verläuft, drehbar. In Fig. 17 ist die Begrenzung 56 in ihrer Ausgangsstellung, also einer Fixierstellung, dargestellt.

In Fig. 18 ist die Begrenzung 56 des Transportmovers 32 der Ausführungsform der Fig. 17 verdreht, also in einer Freigabestellung, dargestellt. Zum Erreichen der Freigabestellung wurde die Begrenzung 56 z.B. durch an dem nicht gezeigten Bahnsystem 34 angeordnete Betätigungsmittel um die Drehachse D verdreht. Dadurch begrenzt die Begrenzung 56 das Tray 38 nicht länger gegenüber einer Bewegung quer zur Transportrichtung B, also im Bild in horizontaler Richtung. Das Tray 38 kann somit in einer Abgaberichtung A nach links oder rechts von der Auflage 36 abgegeben werden. Mit anderen Worten liegt das Tray 38 auf der Auflage 36 als starre, am Transportmover 32 fixierte Platte auf. Die Begrenzung 56 kann auch als Einfassung, Rahmen, Gitter, Stäbe und dergleichen gebildet sein und ist an zwei gegenüberliegenden Punkten drehbar an der Auflage 36 bzw. am Träger des Transportmovers 32 gelagert. Das Tray 38 kann in der Fixierstellung der Fig. 17 von oben aufgelegt und/oder in die Begrenzung 56 aufgenommen werden und in der Freigabestellung der Fig. 18 zu einer Seite hin abgeschoben bzw. von einer Seite her aufgenommen werden. Die Begrenzung 56 kann z.B. durch eine Federkraft in der Fixierstellung gehalten werden oder durch ein (von außen lösbares) Rastmittel in der Fixierstellung festgelegt werden. Die bahnseitigen Betätigungsmittel können z.B. mechanisch, pneumatisch und/oder magnetisch ein Verdrehen oder Verschwenken der Begrenzung 56 bewirken.

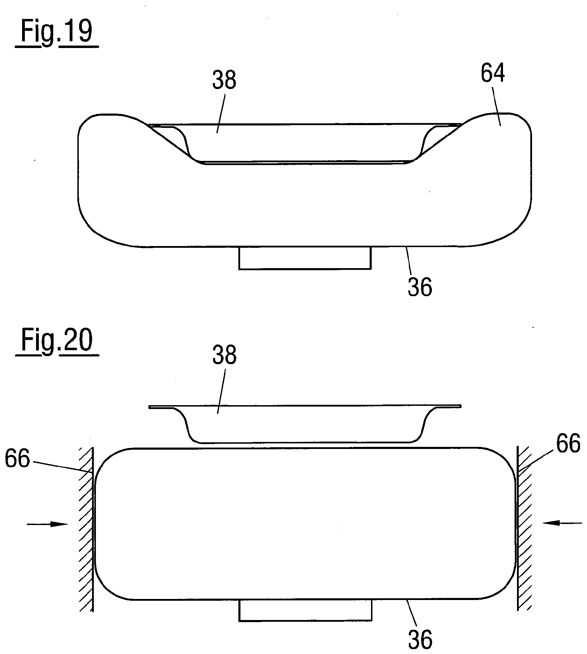

In Fig. 19 ist eine Auflage 36 zum Tragen eines Trays 38 gezeigt, die verformbar ausgeführt ist. Das Tray 38 verformt durch sein Eigengewicht die Auflage 36 derart, dass sich um das Tray 38 herum ein oder mehrere Verdrängungsabschnitte 64 ausbilden. Die Verdrängungsabschnitte 64 sichern das Tray 38 gegenüber einer Bewegung in horizontaler Richtung. Das Tray 38 formt sich also sein eigenes Bett in der Auflage 36, welches an die Form des Trays 38 angepasst ist. Der Formungsvorgang kann z.B. durch zusätzliches Eindrücken des Trays 38 in die Auflage 36 verstärkt oder unterstützt werden. Die Verdrängungsabschnitte 34 bilden eine Begrenzung, um das Tray 38 aufzunehmen.

In Fig. 20 ist die Auflage 36 der Fig. 19 gezeigt, nachdem sie durch Backen 66 einer Betätigungseinrichtung von zwei Seiten mit einer Kraft beaufschlagt wurde, um in eine Freigabestellung versetzt zu werden. Dadurch wurde das Tray 38 aus seinem Bett gehoben, wobei das Bett, die Verdrängungsabschnitte 64 und die Begrenzung für das Tray 38 verschwunden sind. Mit anderen Worten wurde durch die Backen 66 die Auflage 36 derart verformt, dass sich die dem Tray 38 zugewandte Oberfläche der Auflage 36 nach oben wölbt, wobei die eine Begrenzung bildenden Verdrängungsabschnitte 64, welche das Tray 38 in Fig. 19 horizontal sichern, verschwunden sind. Die Auflage 36 kann auch stärker als in Fig. 20 dargestellt mit einer Kraft oder einem Druck beaufschlagt werden, so dass die dem Tray 38 zugewandte Oberfläche der Auflage 36 sich weiter, insbesondere konvex, nach oben wölbt, um ein Abgeben des Trays 38 von der Auflage 36 weiter zu vereinfachen.

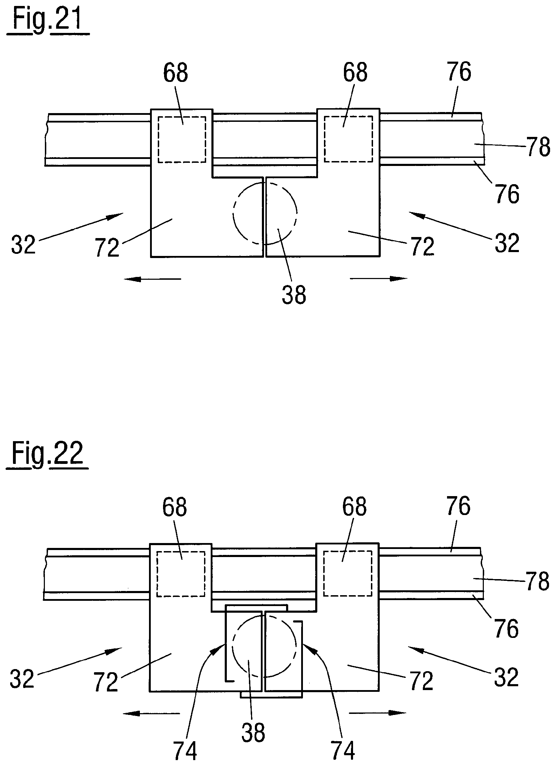

In Fig. 21 sind in einer Bahn 78 des Bahnsystem zwei einander zugeordnete Transportmover 32 gezeigt, die jeweils einen seitlich auskragenden Auflagebereich 72 für zu transportierende Trays 38 (beispielhaft angedeutet durch einen strichpunktierten Kreis) aufweisen. Die diese Auflagebereiche 72 bereitstellenden Auflagen dieser beiden Mover 32 sind in diesem Ausführungsbeispiel jeweils im Wesentlichen L-förmig und zueinander spiegelverkehrt ausgebildet. Auf diese Weise ist im Bereich des die Führungen 76 umfassenden Bahnsystems 78 zwischen den Movern 32 ein freier Raum auch dann vorhanden, wenn die beiden Auflagen mit ihren auskragenden Auflagebereichen 72 entsprechend der Situation in Fig. 21 eine zusammenhängende oder allenfalls von einem kleinen Spalt unterbrochene Gesamt-Auflagefläche für die Trays 38 bereitstellen.

Um die Trays 38 - in diesem Ausführungsbeispiel durch Fallenlassen - abzugeben, werden die beiden Mover 32 in entgegengesetzte Richtungen voneinander weg bewegt, wie es durch die beiden Pfeile in Fig. 21 angedeutet ist.

Das in Fig. 22 gezeigte Ausführungsbeispiel entspricht jenem der Fig. 21, wobei zusätzlich jeder Mover 32 mit einer als Abstreifer oder Abräumer ausgebildeten Abgabehilfe 74 versehen ist. Die Abstreifer 74 sind jeweils an dem einen Mover 32 befestigt und erstrecken sich zum Auflagebereich 72 des anderen Movers 32 hin, sodass sie beim Auseinanderbewegen der beiden Mover 32 mit den Trays 38 in einer jeweils gewünschten, u.a. von der Ausgestaltung der Abstreifer 74 abhängigen Art und Weise zusammenwirken können.

Die Abstreifer 74 können jeweils starr sein und mit ihrer Ausladung zumindest im Wesentlichen an den relativen Verfahrweg der beiden Mover 32 angepasst sein. Alternativ oder zusätzlich kann sich der zu einem Auflagebereich 72 hin erstreckende Abstreifer 74 mit diesem Auflagebereich 72 mitbewegen, wenn die beiden Mover 32 voneinander weg bewegt werden.

Die Abstreifer 74 können elastisch auslenkbar sein, um beim Auseinanderbewegen der Mover 32 nachgeben zu können, z.B. wenn sie in Kontakt mit den Trays 38 gelangen und die Trays 38 dann noch teilweise auf dem oder den Auflagebereichen 72 aufliegen.

Die Ausgestaltung und Anordnung der Abstreifer 74 hängt auch von der Beschaffenheit der jeweiligen Trays 38 ab. Es ist auch möglich, die Auflagebereiche 72 jeweils mittels der Abstreifer 74 abzukämmen. Die Abstreifer 74 können grundsätzlich in jeder beliebigen Höhenposition mit den Trays 38 zusammenwirken.

Auch ist es möglich, beispielsweise klingen- oder drahtartige Abstreifer 74 einzusetzen, die zwischen der Unterseite der Trays 38 und der Oberseite der Auflagebereiche 72 hindurchbewegt werden, wenn die Mover 32 auseinanderbewegt werden, um erforderlichenfalls auf diese Weise die Trays 38 von den Auflagebereichen 72 zu trennen oder abzulösen, so dass die Auflagebereiche 72 besser unter den Trays 38 wegbewegt werden könnnen.

Alternativ oder zusätzlich zu mit den Movern 32 mitbewegbaren Abstreifern 74 kann eine in Bewegungsrichtung der Mover 32 relativ zu diesen stationäre Fixiereinrichtung vorgesehen sein, die z.B. einen rahmenartigen Aufbau aufweist und im Bereich der jeweiligen Abgabeposition der Trays 38 auf einen auf dem gemeinsamen Auflagebereich der beiden Mover 32 jeweils aufliegenden Tray absenkbar ist und diesen Tray umgreift oder übergreift. Beispielsweise kann hierbei ein Fixierrahmen um den Tray gelegt werden. Hierdurch wird beim Auseinanderbewegen der Mover 32 der Tray 38 zumindest in Bewegungsrichtung der Mover 32 selbst dann festgehalten, wenn der Tray 38 aus welchen Gründen auch immer an den Auflagebereichen 72 der Mover 32 haftet. Auf diese Weise ist sichergestellt, dass durch Fallenlassen abzugebende Trays 38 an der jeweils vorgegebenen Abgabeposition verbleiben, wenn die Mover 32 zum Erzeugen einer "Abgabeöffnung " auseinanderbewegt werden.

Generell erfolgt das Auseinanderbewegen der Mover 32 vorzugsweise insofern gleichzeitig, als die beiden Mover 32 jeweils mit der gleichen Geschwindigkeit und über die gleiche Wegstrecke in die entgegengesetzten Richtungen bewegt werden. -.-.-.

### Bezugszeichenliste

- 32: Transportmover
- 33: Schiebemittel
- 34: Bahnsystem
- 36: Auflage
- 37: Oberfläche
- 38: Aufnahme, Tray
- 39: Klemmeinrichtung
- 40: Klemmorgan
- 42: Betätigungsnase
- 44: Feststelleinrichtung
- 46: Erhöhung
- 48: Vertiefung
- 50: Rand
- 52: Führung
- 54: Neigungslager
- 56: Begrenzung
- 58: Federbügel
- 60: Betätigungseinrichtung
- 64: Verdrängungsabschnitt
- 66: Backe
- 68: Läufer
- 70: Träger
- 72: Auflagebereich
- 74: Abgabehilfe
- 76: Führung
- 78: Bahn

- A: Abgaberichtung
- B: Transportrichtung
- D: Drehachse

## Patentansprüche

1. Vorrichtung zum Bewegen von Objekten, insbesondere von Portionen, die jeweils wenigstens eine von einem Lebensmittelprodukt abgetrennte Scheibe umfassen,
mit einer Mehrzahl individuell bewegbarer Transportmover (32) für jeweils wenigstens ein Objekt,
mit einem Bahnsystem (34) für die Transportmover (32), in welchem die Transportmover (32) entlang wenigstens einer vorgegebenen Bahn in einer Transportrichtung (B) bewegbar sind, und
mit einer Steuereinrichtung zum Steuern der Bewegungen der Transportmover (32) in dem Bahnsystem (34),
wobei zumindest ein Transportmover (32) wenigstens eine zu jedem Zeitpunkt oder zumindest zeitweise rahmenfreie Auflage (36) für zumindest einen Teil einer, insbesondere schalenartigen, Aufnahme (38) zum Aufnehmen wenigstens eines zu bewegenden Objekts aufweist, insbesondere für eine Verpackung oder einen Teil einer Verpackung, bevorzugt für ein Tray zum Aufnehmen zumindest einer Portion,
wobei die Transportmover (32) jeweils zumindest einen mit dem Bahnsystem (34) zusammenwirkenden Läufer umfassen, wobei zumindest ein und insbesondere jeder Transportmover (32) wenigstens einen am Läufer angebrachten Träger umfasst, der die rahmenfreie Auflage (36) bildet oder mit der rahmenfreien Auflage (36) verbunden ist, und
wobei zusätzlich zu der Auflage (36) Fixiermittel vorgesehen sind, die zum zeitweisen Fixieren der Aufnahme (38) auf der Auflage (36) ausgestaltet sind,
**dadurch gekennzeichnet, dass**
die Auflage (36) sich zumindest vorübergehend in einer Auskragposition befindet, in welcher die Auflage (36) wenigstens mit einem Auflagebereich (72) für die Aufnahme seitlich auskragt, und dass zumindest ein Paar von zusammenwirkenden Transportmovern (32) vorgesehen ist, die gemeinsam mit ihren Auflagebereichen (72) einen gemeinsamen, seitlich auskragenden Auflagebereich für die Aufnahme (38) bilden, wobei der Auflagebereich (72) seitlich versetzt zu einem Stator des Bahnsystems (34), zu einem Läufer des Transportmovers (32) und/oder zu einer Führung für den Läufer angeordnet ist, wobei die beiden Transportmover (32) zur Abgabe von Aufnahmen (38) derart relativ zueinander bewegbar sind, dass die Auflagebereiche (72) unter den Aufnahmen (38) weg bewegbar sind.

2. Vorrichtung nach Anspruch 1,
**dadurch gekennzeichnet, dass**
die Fixiermittel zur Erzeugung einer Haltekraft ausgebildet sind, die im Wesentlichen in horizontaler Richtung und/oder in einer zur Transportrichtung parallelen Ebene wirksam ist.

3. Vorrichtung nach Anspruch 1,
**dadurch gekennzeichnet, dass**
die Fixiermittel dazu ausgebildet sind, die Aufnahme (38) durch Reibschluss zu fixieren, wobei insbesondere die Fixiermittel in Form einer reibungserhöhenden Oberfläche (37) der rahmenfreien Auflage (36) vorgesehen sind.

4. Vorrichtung nach Anspruch 1,
**dadurch gekennzeichnet, dass**
die Fixiermittel dazu ausgebildet sind, die Aufnahme (38) durch Anhaften zu fixieren, wobei insbesondere die Fixiermittel in Form einer Haft- oder Klebeschicht oder in Form einer oder mehrerer vereinzelter Haft- oder Klebestellen auf der rahmenfreien Auflage (36) vorgesehen sind.

5. Vorrichtung nach Anspruch 1,
**dadurch gekennzeichnet, dass**
die Fixiermittel dazu ausgebildet sind, die Aufnahme (38) mittels Unterdruck zu fixieren, wobei insbesondere die Fixiermittel wenigstens eine, bevorzugt eine Mehrzahl verteilt angeordneter, Saugeinrichtungen umfassen.

6. Vorrichtung nach Anspruch 1,
**dadurch gekennzeichnet, dass**
die Fixiermittel zwischen einer Fixierstellung und einer Freigabestellung für die Aufnahme (38) verstellbar sind, insbesondere mittels einer zumindest teilweise außerhalb des betreffenden Transportmovers (32), bevorzugt am Bahnsystem (34), vorgesehenen Betätigungseinrichtung (60), insbesondere wobei die Fixiermittel durch Passieren einer, insbesondere an der Bahn vorgesehenen, Betätigungsstelle verstellbar sind.

7. Vorrichtung nach Anspruch 1,
**dadurch gekennzeichnet, dass**
zwischen einer Fixierstellung und einer Freigabestellung verstellbare, insbesondere einen oder mehrere mittels einer bahnseitigen Schräge oder Rampe in die Freigabestellung biegbare Federbügel (58) umfassende, Fixiermittel zumindest einen Teil der Auflage (36) bilden.

8. Vorrichtung nach Anspruch 1,
**dadurch gekennzeichnet, dass**
die Fixiermittel eine Klemmeinrichtung (39) umfassen, die dazu ausgebildet ist, die Aufnahme (38) an einer oder mehreren Klemmstellen zu fixieren.

9. Vorrichtung nach Anspruch 8,
**dadurch gekennzeichnet, dass**
die Klemmeinrichtung (39) dazu ausgebildet ist, die Aufnahme (38) zwischen wenigstens einem, insbesondere verstellbaren, Klemmorgan (40) und der rahmenfreien Auflage (36) einzuklemmen.

10. Vorrichtung nach Anspruch 1,
**dadurch gekennzeichnet, dass**
die Auflage (36) mit einer nichtebenen Topografie als Fixiermittel versehen ist, insbesondere mit einer oder mehreren Vertiefungen (48) und/oder einer oder mehreren Erhöhungen (46), und/oder insbesondere wobei die Fixiermittel eine oder mehrere Erhöhungen (46) umfassen, die in einer Fixierstellung über eine Auflagefläche der Auflage (36) hinaus vorstehen, wobei insbesondere die oder jede Erhöhung (46) zwischen einer Fixierstellung und einer Freigabestellung für die Aufnahme (38) verstellbar und bevorzugt in oder unter die Auflagefläche versenkbar ist.

11. Vorrichtung nach Anspruch 1,
**dadurch gekennzeichnet, dass**
die Fixiermittel für zumindest einen Teil einer Auflagefläche der Auflage (36) eine ein- oder mehrteilige Begrenzung (56) oder Einfassung umfassen, die relativ zu der Auflagefläche verstellbar ist, insbesondere in zumindest im Wesentlichen vertikaler Richtung, wobei vorzugsweise die Auflagefläche zum Freigeben der Aufnahme (38) anhebbar und zum Fixieren der Aufnahme (38) absenkbar ist.

12. Vorrichtung nach Anspruch 1,
**dadurch gekennzeichnet, dass**
zumindest einer der Auflagebereiche (72) der beiden Transportmover (32) relativ zu einer mit der Auflage (36) bei der Abgabe zusammenwirkenden Abgabehilfe (74) bewegbar ist, insbesondere wobei die Abgabehilfe (74) als Abstreifer oder als Fixierer ausgebildet ist.

13. System mit einer Vorrichtung nach zumindest einem der vorhergehenden Ansprüche und mit wenigstens einer, insbesondere schalenartigen, Aufnahme (38) zum Aufnehmen wenigstens eines mittels der Vorrichtung zu bewegenden Objekts,
wobei die Aufnahme (38), insbesondere deren Unterseite, und die Auflage (36) zusammenwirkende Fixiermittel aufweisen, die derart ausgestaltet sind, dass durch das Zusammenwirken der Fixiermittel die Aufnahme (38) zumindest zeitweise auf der Auflage (36) fixiert wird, insbesondere wobei die Fixiermittel als Formschlussmittel ausgebildet sind.

14. System nach Anspruch 13,
**dadurch gekennzeichnet, dass**
die Aufnahme (38) dazu ausgebildet ist, zumindest bereichsweise die Auflage (36) zu umgreifen und/oder zu hintergreifen und/oder seitlich an der Auflage (36) vorbei unter eine Auflagefläche der Auflage (36) zu greifen.

## Claims

1. An apparatus for moving objects, in particular portions which each comprise at least one slice cut off from a food product,
having a plurality of individually movable transport movers (32) for a respective at least one object;
having a path system (34) for the transport movers (32) in which the transport movers (32) are movable in a transport direction (B) along at least one predefined path; and
having a control device for controlling the movements of the transport movers (32) in the path system (34),
wherein at least one transport mover (32) has at least one support (36) which is free of a frame at all times or at least at times for at least a part of a receiver (38), in particular a bowl-like receiver (38), for receiving at least one object to be moved, in particular for a packaging or for a part of a packaging, preferably for a tray for receiving at least one portion;
wherein the transport movers (32) each comprise at least one runner cooperating with the path system (34), with at least one, and in particular each, transport mover (32) comprising at least one carrier attached to the runner, said carrier forming the frame-free support (36) or being connected to the frame-free support (36); and
wherein fixing means are provided in addition to the support (36) which are configured for an at least time-wise fixing of the receiver (38) on the support (36),
**characterized in that**
the support (46) is at least temporarily located in a protruding position in which at least a support region (72) of the support (36) for the receiver laterally protrudes; and **in that**
at least one pair of cooperating transport movers (32) is provided which form, together with their support regions (72), a common, laterally protruding support region for the receiver (38), with the support region (72) being arranged laterally offset from a stator of the path system (34), from a runner of the transport mover (32) and/or from a guide for the runner, and with the two transport movers (32) being movable relative to one another for the delivery of receivers (38) such that the support regions (72) are movable away beneath the receivers (38).

2. An apparatus in accordance with claim 1,
**characterized in that**
the fixing means are configured for generating a retaining force which is substantially effective in a horizontal direction and/or in a plane in parallel with the transport direction.

3. An apparatus in accordance with claim 1,
**characterized in that**
the fixing means are configured to fix the receiver (38) by friction locking, with the fixing means in particular being provided in the form of a friction-increasing surface (37) of the frame-free support (36).

4. An apparatus in accordance with claim 1,
**characterized in that**
the fixing means are configured to fix the receiver (38) by adhesion, with the fixing means in particular being provided in the form of an adherent layer or of an adhesive layer or in the form of one or more singular adherent points or adhesive points on the frame-free support (36).

5. An apparatus in accordance with claim 1,
**characterized in that**
the fixing means are configured to fix the receiver (38) by means of vacuum, with the fixing means in particular comprising at least one suction device, preferably a plurality of suction devices arranged in a distributed manner.

6. An apparatus in accordance with claim 1,
**characterized in that**
the fixing means are adjustable between a fixing position and a release position for the receiver (38), in particular by means of an actuation device (60) provided at least partly outside the respective transport mover (32), preferably at the path system (34), in particular with the fixing means being adjustable by passing an actuation point in particular provided at the path.

7. An apparatus in accordance with claim 1,
**characterized in that**
fixing means adjustable between a fixing position and a release position and in particular comprising one or more spring clips (58) bendable into the release position by means of a chamfer or ramp at the path side form at least a part of the support (36).

8. An apparatus in accordance with claim 1,
**characterized in that**
the fixing means comprise a clamping device (39) which is configured to fix the receiver (38) to one or more clamping points.

9. An apparatus in accordance with claim 8,
**characterized in that**
the clamping device (39) is configured to clamp the receiver (38) between at least one clamping member (40), in particular an adjustable clamping member (40), and the frame-free support (36).

10. An apparatus in accordance with claim 1,
**characterized in that**
the support (36) is provided with a non-planar topography as the fixing means, in particular with one or more recesses (48) and/or one or more elevated portions (46), and/or in particular with the fixing means comprising one or more elevated portions (46) which project beyond a support surface of the support (36) in a fixing position, with the or each elevated portion (46) in particular being adjustable between a fixing position and a release position for the receiver (38) and preferably being lowerable into or beneath the support surface.

11. An apparatus in accordance with claim 1,
**characterized in that**
the fixing means for at least a part of a support surface of the support (36) comprise a single-part or multi-part boundary (56) or enclosure which is adjustable relative to the support surface, in particular in an at least substantially vertical direction, with the support surface preferably being raisable to release the receiver (38) and being lowerable to fix the receiver (38).

12. An apparatus in accordance with claim 1,
**characterized in that**
at least one of the support regions (72) of the two transport movers (32) is movable relative to a delivery aid (74) cooperating with the support (36) on the delivery, in particular with the delivery aid (74) being configured as a scraper or as a fixer.

13. A system having an apparatus in accordance with at least one of the preceding claims and having a receiver (38), in particular a bowl-like receiver (38), for receiving at least one object to be moved by means of the apparatus,
wherein the receiver (38), in particular its lower side, and the support (36) have cooperating fixing means which are configured such that the receiver (38) is fixed on the support (36) at least at times by the cooperation of the fixing means, in particular with the fixing means being configured as shape matching means.

14. A system in accordance with claim 13,
**characterized in that**
the receiver (38) is configured to engage around and/or to engage behind the support (36) at least regionally and/or to grip laterally past the support (36) beneath a support surface of the support (36).

## Revendications

1. Dispositif servant à déplacer des objets, en particulier des portions, comprenant chacun(e) au moins une tranche coupée d'un produit alimentaire, comportant
une pluralité d'organes de transport (32) mobiles individuellement pour au moins un objet respectif,
un système de voie (34) pour les organes de transport (32), dans lequel les organes de transport (32) sont mobiles dans une direction de transport (R) le long d'au moins une voie donnée, et
un moyen de commande pour commander les mouvements des organes de transport (32) dans le système de voie (34),
dans lequel
au moins un organe de transport (32) présente au moins un support (36), dépourvu de cadre à tout moment ou au moins temporairement, pour au moins une partie d'un logement (38), en particulier en forme de bol, destiné à recevoir au moins un objet à déplacer, en particulier pour un emballage ou une partie d'un emballage, de préférence pour un plateau destiné à recevoir au moins une portion, et
les organes de transport (32) comprennent chacun au moins un curseur coopérant avec le système de voie (34), au moins un et en particulier chaque organe de transport (32) comprenant au moins un support fixé au curseur, qui constitue le support dépourvu de cadre (36) ou est relié au support dépourvu de cadre (36), et
en supplément au support (36), il est prévu des moyens de fixation qui sont conçus pour fixer temporairement le logement (38) sur le support (36), **caractérisé en ce que**
le support (36) est au moins temporairement en position de porte-à-faux dans laquelle le support (36) est latéralement en porte-à-faux au moins avec une zone de support (72) pour le logement, et **en ce que** il est prévu au moins une paire d'organes de transport (32) qui coopèrent et qui, conjointement avec leurs zones de support (72), forment une zone de support commune, latéralement en porte-à-faux, pour le logement (38), la zone de support (72) étant disposée latéralement en décalage par rapport à un stator du système de voie (34), à un curseur de l'organe de transport (32) et/ou à un guidage pour le curseur, les deux organes de transport (32) étant mobiles l'un par rapport à l'autre pour remettre des logements (38) de telle sorte que les zones de support (72) au-dessous des logements (38) sont mobiles en éloignement.

2. Dispositif selon la revendication 1,
**caractérisé en ce que**
les moyens de fixation sont réalisés pour générer une force de maintien qui agit sensiblement dans une direction horizontale et/ou dans un plan parallèle à la direction de transport.

3. Dispositif selon la revendication 1,
**caractérisé en ce que**
les moyens de fixation sont réalisés pour fixer le logement (38) par coopération de friction, les moyens de fixation étant en particulier prévus sous la forme d'une surface (37) du support dépourvu de cadre (36), laquelle renforce la friction.

4. Dispositif selon la revendication 1,
**caractérisé en ce que**
les moyens de fixation sont réalisés pour fixer le logement (38) par adhérence, les moyens de fixation étant en particulier prévus sous la forme d'une couche adhésive ou d'une couche de colle ou sous la forme d'un ou de plusieurs points individuels d'adhérence ou de colle sur le support dépourvu de cadre (36).

5. Dispositif selon la revendication 1,
**caractérisé en ce que**
les moyens de fixation sont réalisés pour fixer le logement (38) par dépression, les moyens de fixation comprenant en particulier au moins un, de préférence une pluralité de moyens d'aspiration disposés de manière répartie.

6. Dispositif selon la revendication 1,
**caractérisé en ce que**
les moyens de fixation peuvent être déplacés entre une position de fixation et une position de libération pour le logement (38), en particulier à l'aide d'un moyen d'actionnement (60) prévu au moins partiellement à l'extérieur de l'organe de transport (32) concerné, de préférence sur le système de voie (34), en particulier
les moyens de fixation peuvent être déplacés en passant par un emplacement d'actionnement prévu en particulier sur la voie.

7. Dispositif selon la revendication 1,
**caractérisé en ce que**
des moyens de fixation déplaçables entre une position de fixation et une position de libération, comprenant en particulier une ou plusieurs étriers élastiques (58) qui peuvent être fléchis vers la position de libération à l'aide d'une pente ou d'une rampe côté voie, forment au moins une partie du support (36).

8. Dispositif selon la revendication 1,
**caractérisé en ce que**
les moyens de fixation comprennent un moyen de serrage (39) réalisé pour fixer le logement (38) à un ou à plusieurs emplacements de serrage.

9. Dispositif selon la revendication 8,
**caractérisé en ce que**
le moyen de serrage (39) est réalisé pour serrer le logement (38) entre au moins un élément de serrage (40), en particulier déplaçable, et le support dépourvu de cadre (36).

10. Dispositif selon la revendication 1,
**caractérisé en ce que**
le support (36) est pourvu d'une topographie non plane à titre de moyen de fixation, en particulier avec une ou plusieurs cavités (48) et/ou une ou plusieurs élévations (46), et/ou
les moyens de fixation comprennent une ou plusieurs élévations (46) qui, dans une position de fixation, dépassent au-delà d'une surface de support du support (36), la ou chaque élévation (46) étant en particulier déplaçable entre une position de fixation et une position de libération pour le logement (38) et étant de préférence rétractable dans ou sous la surface de support.

11. Dispositif selon la revendication 1,
**caractérisé en ce que**
pour au moins une partie d'une surface de support du support (36), les moyens de fixation comprennent une délimitation (56) ou une enceinte en une ou en plusieurs parties qui est déplaçable par rapport à la surface de support, en particulier dans une direction au moins sensiblement verticale, la surface de support pouvant de préférence être relevée pour libérer le logement (38) et être abaissée pour fixer le logement (38).

12. Dispositif selon la revendication 1,
**caractérisé en ce que**
l'une au moins des zones de support (72) des deux organes de transport (32) est mobile par rapport à un accessoire de remise (74) qui coopère avec le support (36) pendant la remise, l'accessoire de remise (74) étant réalisé en particulier sous forme de racleur ou de fixateur.

13. Système comportant un dispositif selon l'une au moins des revendications précédentes et au moins un logement (38), en particulier en forme de bol, pour recevoir au moins un objet à déplacer à l'aide du dispositif,
dans lequel
le logement (38), en particulier son côté inférieur, et le support (36) comprennent des moyens de fixation qui coopèrent et qui sont réalisés de telle sorte que le logement (38) est fixé au moins temporairement sur le support (36) par la coopération des moyens de fixation, les moyens de fixation étant réalisés en particulier sous forme de moyens de coopération de forme.

14. Système selon la revendication 13,
**caractérisé en ce que**
le logement (38) est réalisé pour entourer et/ou engager par l'arrière au moins localement le support (36) et/ou pour s'engager au-dessous d'une surface de support du support (36) en contournant latéralement ledit support (36).
